(19) Europäisches Patentamt
European Patent Office
Office européen des brevets

(11) **EP 3 422 559 B1**

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(51) Int Cl.:
*H02P 6/20* *(2016.01)*      *H02P 21/34* *(2016.01)*
*H02P 21/36* *(2016.01)*     *F04D 25/06* *(2006.01)*
*H02M 5/00* *(2006.01)*

(21) Anmeldenummer: **17179017.3**

(22) Anmeldetag: **30.06.2017**

(54) **MODULATIONSVERFAHREN FÜR EINEN DREHSTROM-WECHSELRICHTER**

MODULATION METHOD FOR AN AC CONVERTER

PROCÉDÉ DE MODULATION POUR UN ONDULEUR TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: **PFEIFFER VACUUM GMBH**
**35614 Asslar (DE)**

(72) Erfinder: **Wang, Jinou**
**35606 Solms-Niederbiel (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 2 991 206      CN-U- 203 151 429**

• AYYANAR R ET AL: "Start-up, short-circuit and dynamic characteristics of the full-load-range ZVS hybrid converter", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, Bd. 1, 17. Juni 2001 (2001-06-17), Seiten 26-30, XP010559119, DOI: 10.1109/PESC.2001.953990 ISBN: 978-0-7803-7067-8

• MOHAN J ET AL: "Performance evaluation of two level unidirectional PWM rectifiers employing space vector modulation (SVM) technique", RECENT ADVANCEMENTS IN ELECTRICAL, ELECTRONICS AND CONTROL ENGINEERING (ICONRAEECE), 2011 INTERNATIONAL CONFERENCE ON, IEEE, 15. Dezember 2011 (2011-12-15), Seiten 384-392, XP032096161, DOI: 10.1109/ICONRAEECE.2011.6129803 ISBN: 978-1-4577-2146-5

• CHEN MIN ET AL: "A Unified Space Vector Pulse Width Modulation for Dual Two-level Inverter System", IEEE TRANSACTIONS ON POWER ELECTRONICS, INSTITUTE OF ELECTRICAL AND ELECTRONICS ENGINEERS, USA, Bd. 32, Nr. 2, 1. Februar 2017 (2017-02-01), Seiten 889-893, XP011634081, ISSN: 0885-8993, DOI: 10.1109/TPEL.2016.2585223 [gefunden am 2016-11-11]

• MOHAMAD NASRUL ABDUL SATAR ET AL: "Application of Proteus VSM in modelling brushless DC motor drives", MECHATRONICS (ICOM), 2011 4TH INTERNATIONAL CONFERENCE ON, IEEE, 17 May 2011 (2011-05-17), pages 1-7, XP031997488, DOI: 10.1109/ICOM.2011.5937161 ISBN: 978-1-61284-435-0

## Beschreibung

Die vorliegende Erfindung betrifft ein Raumzeiger-Modulationsverfahren sowie ein hybrides Modulationsverfahren zur Ansteuerung eines Drehstrom-Wechselrichters, insbesondere eines Drehstrom-Zweipunkt-Wechselrichters, für eine auf der Basis einer Pulsweitenmodulation betreibbare Drehstrommmaschine, insbesondere eine Drehstrommmaschine einer Vakuumpumpe, bevorzugt einer Turbomolekularpumpe. Die Erfindung betrifft ferner ein Verfahren zum Hochfahren einer auf der Basis der Pulsweitenmodulation betreibbaren geberlosen Drehstrommmaschine, eine Vorrichtung zur Ansteuerung einer Drehstrommmaschine sowie eine Vakuumpumpe, insbesondere Turbomolekularpumpe, mit einer über eine solche Ansteuervorrichtung ansteuerbaren Drehstrommmaschine.

Anstelle des Begriffs "Hochfahren" wird im Folgenden auch der Begriff "Hochlaufen" verwendet. Beide Begriffe sind als gleichwertig zu verstehen.

Vakuumpumpen wie zum Beispiel Turbomolekularpumpen werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen.

Unter einer Raumzeigermodulation versteht man in der Leistungselektronik ein Verfahren zur Steuerung von rotierenden elektrischen Maschinen auf der Basis der Pulsweitenmodulation. Basierend auf dieser Modulationsart ist es möglich, ein Mehrphasendrehstromsystem auf elektronischem Wege nachzubilden, wie es für den Betrieb von Drehstrommaschinen benötigt wird. Durch die Raumzeigerdarstellung genügen zwei Größen, der Winkel des Raumzeigers und dessen Betrag oder Real- und/oder Imaginärteil, um die Flussdichteverteilung in der Maschine vorzugeben. Soll ein Dreiphasensystem nachgebildet werden, so benötigt man für jede der drei Phasen eine Halbbrücke, über die die Ausgangsspannungen der Phasen U, V, W auf das positive oder auf das negative Zwischenkreispotential gelegt werden können.

Bei der bisher üblichen Raumzeigermodulation wird für den Startpunkt ein konstantes Spannungspotential von

$$\frac{1}{2}\,U_{dc}$$

verwendet, was für die verschiedenen Phasen $\zeta = U, V, W$ jeweils ein Taktverhältnis $\lambda_\zeta$ mit sich bringt, das durch

die Beziehung $\lambda_\zeta = \dfrac{u_{\zeta,0}^* + \frac{1}{2}U_{dc}}{U_{dc}},$ $\zeta = U,\ V,\ W$ bestimmt ist. Mit einer solchen herkömmlichen Modulation kann nun aber nur eine maximale Spannungsamplitude von $\dfrac{1}{2}\,U_{dc}$ erreicht werden, die kleiner ist als die theoretisch erreichbare

Amplitude von $\dfrac{U_{dc}}{\sqrt{3}}.$ Zur Erhöhung des Betriebsspannungsbereichs muss daher ein Nullsystem eingeführt werden, bei dem die Phasen eine gleiche Richtung und eine gleiche Länge besitzen. Dies bringt nun aber einen zusätzlichen Rechenaufwand mit sich.

In der Druckschrift Ayyanar R ET AL: "Start-up, short-circuit and dynamic characteristics of the full-load-range ZVS hybrid converter", 32ND. ANNUAL IEEE POW-ER ELECTRONICS SPECIALISTS CONFERENCE. PESC 2001. CONFERENCE PROCEEDINGS. VANCOUVER, CANADA, JUNE 17-21, 2001; [ANNUAL POW-ER ELECTRONICS SPECIALISTS CONFERENCE]; NEW YORK, NY: IEEE, US, Bd. 1, 17. Juni 2001 (2001-06-17), Seiten 26-30, XP010559119, D0I: 10.1109/PESC.2001.953990 ISBN: 978-0-7803-7067-8

*Teil II*
*Abbildung 2*,

ist eine Modulationsstrategie offenbart, bei der Halbleiterschalter derart angesteuert werden, dass sie jeweils 50 % Tastgrad besitzen und phasenverschoben geschaltet werden, so dass sich stets nur zwei Phasen gleichzeitig in leitendem Zustand befinden. Die betreffende Offenbarung steht in keinem Bezug zu einer 3-phasigen Raumzeigemodulation für Drehstrommmaschinen.

In der Druckschrift MOHAMAD NASRUL ABDUL SATAR ET AL: "Application of Proteus VSM in modelling brushless DC motor drives", MECHATRONICS (ICOM), 2011 4TH INTERNATIONAL CONFERENCE ON, IEEE, 17. Mai 2011 (2011-05-17), Seiten 1-7, XP031997488, DOI: 10.1109/ICOM.2011.5937161, ISBN: 978-1-61284-435-0 ist ein bürstenloser Gleichstrommotor mit zugeordnetem Wechselrichter beschrieben, dessen Schalter durch rechteckförmige Steuersignale angesteuert werden, durch die sie jeweils über 120° in einen leitenden Zustand versetzt werden.

Dabei sind zu jedem Zeitpunkt zwei Leistungsschalter eingeschaltet, so dass während eines jeweiligen Intervalls zwei Lastanschlüsse (Y-Schaltung) an die Gleichspannungsversorgung angeschlossen sind und ein Anschluss offen bleibt.

Ein Raumzeiger-Modulationsverfahren ist beispielsweise in der EP 2 991 206 A1 beschrieben.

Der Erfindung liegt die Aufgabe zugrunde, ein Raumzeiger-Modulationsverfahren, ein hybrides Modulationsverfahren, ein Hochfahrverfahren und eine Vorrichtung der eingangs genannten Art anzugeben, mit denen ein jeweiliger Wechselrichter für eine auf der Basis der Pulsweitenmodulation betriebene Drehstrommaschine effizienter und mit geringeren Schaltverlusten ansteuerbar bzw. die Drehstrommaschine einfacher und robuster hochfahrbar ist.

Die Aufgabe wird erfindungsgemäß durch ein Raumzeiger-Modulationsverfahren mit den Merkmalen des Anspruchs 1, durch ein hybrides Modulationsverfahren mit den Merkmalen des Anspruchs 6, durch ein Hochfahrverfahren mit den Merkmalen des Anspruchs 7, durch eine Vorrichtung mit den Merkmalen des Anspruchs 13 und durch eine Vakuumpumpe, insbesondere Turbomolekularpumpe, mit den Merkmalen des Anspruchs 14 gelöst. Bevorzugte Ausgestaltungen des erfindungsgemäßen Raumzeiger-Modulationsverfahrens und des erfindungsgemäßen Hochfahrverfahrens ergeben sich aus den Unteransprüchen.

Das erfindungsgemäße Raumzeiger-Modulationsverfahren zur Ansteuerung eines Drehstrom-Wechselrichters, insbesondere eines Drehstrom-Zweipunkt-Wechselrichters, für eine auf der Basis der Pulsweitenmodulation betreibbare Drehstrommaschine, insbesondere eine Drehstrommaschine einer Vakuumpumpe, bevorzugt einer Turbomolekularpumpe, zeichnet sich dadurch aus, dass während einer jeweiligen Pulsweitenmodulations-Periode zumindest eine der drei Phasen U, V, W des Wechselrichters nicht geschaltet bzw. höchstens zwei der drei Phasen U, V, W des Wechselrichters geschaltet werden, und dass die endgültigen Ausgangsspannungspotentiale $u_{U\,final}$, $u_{V\,final}$ und $u_{W\,final}$ für die drei Phasen U, V, W des Wechselrichters werden dann vorzugsweise über die folgenden Beziehungen berechnet:

$$u_{U\,final} = u_{U0} - u_{Min}, \quad u_{V\,final} = u_{V0} - u_{Min} \quad und \quad u_{W\,final} = u_{W0} - u_{Min}.$$

Bevorzugt werden ausgehend von einem gegebenen Soll-Spannungsraumzeiger zunächst die drei Soll-Spannungspotentiale $u_{U0}$, $u_{V0}$ und $u_{W0}$ der drei Phasen U, V, W des Wechselrichters berechnet, von den berechneten drei Soll-Spannungspotentialen $u_{U0}$, $u_{V0}$ und $u_{W0}$ der minimale Wert $u_{Min}$, d.h. das Kleinste dieser drei Soll-Spannungspotentiale, ermittelt und die endgültigen Ausgangsspannungspotentiale $u_{U\,final}$, $u_{V\,final}$, $u_{W\,final}$ für die drei Phasen U, V, W des Wechselrichters unter Berücksichtigung des ermittelten minimalen Wertes $u_{Min}$ berechnet.

Das Taktverhältnis $\lambda$ für eine jeweilige Phase U, V, W des Wechselrichters wird dann vorteilhafterweise über die folgenden Beziehungen berechnet:

$\lambda_U = u_{U\,final} / U_{dc}$, $\lambda_V = u_{V\,final} / U_{dc}$ und $\lambda_W = u_{W\,final} / U_{dc}$, wobei $U_{dc}$ die Zwischenkreisspannung ist.

Mit der erfindungsgemäßen effizienten Berechnung ist ein maximaler resultierender Spannungsbetrag von

$U_{dc}/\sqrt{3}$ ohne die Einführung eines Nullsystems realisierbar. Ein weiterer Vorteil des erfindungsgemäßen Modulationsverfahrens besteht darin, dass während jeder PWM-(Pulsweitenmodulation-)Periode wenigstens eine Phase nicht schaltet. Betrachtet man eine Umdrehung des Spannungsraumzeigers, so wird ein jeweiliges Schaltelement des Wechselrichters nur zu zwei Dritteln der Zeit geschaltet, was bedeutet, dass die effektive Schaltfrequenz um etwa 33% reduziert wird, so dass auch die Schaltverluste entsprechend reduziert werden.

Bevorzugt werden die drei Soll-Spannungspotentiale $u_{U0}$, $u_{V0}$ und $u_{W0}$ der drei Phasen U, V, W des Wechselrichters unter Verwendung einer inversen Clarke-Transformation aus zwei Spannungen $u_\alpha$ und $u_\beta$ in einem orthogonalen Koordinatensystem berechnet.

Die auch als $\alpha,\beta$-Transformation bezeichnete Clarke-Transformation dient dazu, mehrphasige Größen wie bei einer Drehstrommaschine mit den Achsen U, V, W in ein einfacheres zweifaches Koordinatensystem mit den Achsen $\alpha$, $\beta$ zu überführen. Die beiden Spannungen $u_\alpha$ und $u_\beta$ können somit vorteilhafterweise aus einem Spannungsvektor in Form eines Betrags und eines Winkels berechnet werden.

Das erfindungsgemäße hybride Modulationsverfahren zur Ansteuerung eines Drehstromwechselrichters, insbesondere eines Drehstrom-Zweipunkt-Wechselrichters, für eine auf der Basis der Pulsweitenmodulation betreibbare Drehstrommaschine, insbesondere eine Drehstrommaschine einer Vakuumpumpe, bevorzugt einer Turbomolekularpumpe, zeichnet sich dadurch aus, dass für relativ größere Phasenströme das erfindungsgemäße Raumzeiger-Modulationsverfahren und für relativ kleinere Phasenströme ein herkömmliches Modulationsverfahren angewandt wird, bei dem alle drei Phasen U, V, W des Wechselrichters zum Spannungsschalten beitragen.

Das erfindungsgemäße Verfahren zum Hochfahren einer auf der Basis der Pulsweitenmodulation betreibbaren geberlosen Drehstrommaschine, insbesondere einer geberlosen Drehstrommaschine einer Vakuumpumpe, bevorzugt einer Turbomolekularpumpe, bei dem insbesondere das erfindungsgemäße Raumzeiger-Modulationsverfahren und/oder das erfindungsgemäße hybride Modulationsverfahren anwendbar ist, zeichnet sich dadurch aus, dass das Hochfahren einen Synchronisationsschritt, einen Hochfahrschritt und einen Überprüfungsschritt umfasst und im Überprüfungsschritt in dem Fall, dass das Hochfahren erfolgreich verlaufen ist, entsprechend einem Teilschritt a) ein interner Beobachter für die geberlose feldorientierte Maschinenregelung initialisiert und das Hochfahrverfahren beendet wird, und im Fall eines Scheiterns des Hochfahrens entsprechend einem Teilschritt b) ein Abbremsen der Drehstrommaschine bis zum Stillstand bewirkt wird, woraufhin die Drehstrommaschine erneut hochgefahren wird.

Bevorzugt wird die Drehstrommaschine im Synchronisationsschritt im Leerlaufbetrieb mit einem Synchronisations-Spannungsvektor $\vec{u}_{sync}$ angesteuert, der durch die Beziehung $\vec{u}_{sync} = u_{sync} \cdot e^{j2\pi f_{sync} \cdot t}$ definiert ist, wobei die gesamte Dauer des Synchronisationsvorgangs bzw. Synchronisationsschritts durch $T_{sync}$ definiert ist, und/oder der Synchronisations-Spannungsvektor $\vec{u}_{sync}$ mit einer konstanten Frequenz $f_{sync}$ in einem relativ geringen Frequenzbereich oder bei der Frequenz Null rotiert,
und/oder die Amplitude $u_{sync}$ des Synchronisations-Spannungsvektors $\vec{u}_{sync}$ innerhalb des Zeitintervalls zwischen 0 und $k_T \times T_{sync}$ mit $k_T \in (0,1)$ zunimmt, und/oder die Amplitude $u_{sync}$ sich während des Zeitintervalls zwischen $k_T \times T_{sync}$ und $T_{sync}$ linear vom Spannungswert $U_{sync}$ bis auf $k_u \times U_{sync}$ mit $k_u \geq 0$ ändert.

Vorteilhafterweise wird die Drehstrommaschine im Hochlaufschritt im Leerlaufbetrieb mit einem Hochlauf-Spannungsvektor $\vec{u}_{up}$ angesteuert, der durch die Beziehung $\vec{u}_{up} = u_{up} \cdot e^{j2\pi f_{up} \cdot t + \gamma_{up}}$ definiert ist, wobei der Hochlaufvorgang durch die Parameter Gesamthochlaufzeit $T_{up}$, Endrotationsgeschwindigkeit $f_{final}$ in Hz und Anfangsamplitude $U_{up}$ definiert ist, und wobei
die Amplitude $u_{up}$ des rotierenden Hochlauf-Spannungsvektors $\vec{u}_{up}$ linear von $U_{up}$ bis $U_{up} + \Delta U$ zunimmt und $\Delta U$ über die Beziehung $\Delta U = 2\pi \cdot \Psi_M \cdot (f_{final} - f_{sync})$ berechnet wird, in der $\Psi_M$ die magnetische Flussdichte der Drehstrommaschine ist, und/oder die Frequenz $f_{up}$ des rotierenden Hochlauf-Spannungsvektors $\vec{u}_{up}$ linear von $f_{sync}$ bis zu einer Endfrequenz zunimmt,
und/oder der Anfangswinkel $\gamma_{up}$ des Hochlauf-Spannungsvektors $\vec{u}_{up}$ am Anfang des Hochlaufvorgangs durch die Beziehung $\gamma_{up} = \gamma_{sync} + \Delta\gamma$ berechnet wird, wobei $\gamma_{sync}$ der Winkel des Synchronisations-Spannungsvektors $\vec{u}_{sync}$ am Ende des Synchronisationsvorgangs und $\Delta\gamma$ ein Parameter zwischen 0 und $\pm 45°$ ist.

Bevorzugt wird im zur Initialisierung vorgesehenen Teilschritt a) des Überprüfungsschrittes die anfängliche elektrische Winkelgeschwindigkeit $\omega_0$ über die Beziehung $\omega_0 = |\vec{u}|/\Psi_M$ bestimmt, der anfängliche elektrische Winkel $\gamma_0$

über die Beziehung $\gamma_0 = \angle\vec{u} - \dfrac{\pi}{2}$ bestimmt, und in dem Fall, dass eine negative Endhochlaufgeschwindigkeit erforderlich sein sollte, diese über die Beziehung $\omega_0 = -|\vec{u}|/\Psi_M$ mit $\gamma_0 = \angle\vec{u} + \dfrac{\pi}{2}$ berechnet.

Gemäß einer vorteilhaften Ausgestaltung des erfindungsgemäßen Hochfahrverfahrens wird im zum Abbremsen vorgesehenen Teilschritt b) des Überprüfungsschrittes der Wechselrichter aktiviert und mit einem konstanten Spannungsvektor $\vec{u} = U_{brk}$ beaufschlagt und bis zu einem Einschaltzeitpunkt $T_{on}$ gewartet, der Wechselrichter deaktiviert und bis zu einem Ausschaltzeitpunkt $T_{off}$ gewartet, bei dem alle Phasenströme den Wert Null annehmen, die Amplitude $|\vec{u}|$ der Gegen-EMK gemessen, in dem Fall, dass die Amplitude $|\vec{u}|$ der Gegen-EMK geringer als ein Grenzwert $U_{stop}$ ist, der Bremsvorgang beendet, und andernfalls der Abbremsteilschritt b) wiederholt.

Von Vorteil ist insbesondere auch, wenn im Überprüfungsschritt nach dem Hochlaufvorgang der Wechselrichter deaktiviert und bis zu dem Ausschaltzeitpunkt $T_{off}$ gewartet wird, bis alle Phasenströme den Wert Null annehmen, die drei Phasenspannungen $u_U$, $u_V$ und $u_W$ als Gegen-EMK gemessen werden und unter Verwendung der Clarke-Transformation der Spannungsvektor $\vec{u} = u_\alpha + j \cdot u_\beta$ der Gegen-EMK berechnet wird,

der Betrag $|\vec{u}| = \sqrt{u_\alpha^2 + u_\beta^2}$ und der Winkel $\angle\vec{u} = atan\left(\dfrac{u_\beta}{u_\alpha}\right)$ des Spannungsvektors der Gegen-EMK berechnet werden, und in dem Fall, dass der Betrag größer ist als ein Grenzwert $U_{backEMF\,low}$, der Initialisierungsteilschritt a) und andernfalls der Abbremsteilschritt b) durchgeführt wird.

Die erfindungsgemäße Vorrichtung zur Ansteuerung einer Drehstrommaschine, insbesondere eines geberlosen Synchron-Drehstrommotors, auf der Basis der Pulsbreitenmodulation, insbesondere zur Ansteuerung einer Drehstrommaschine bzw. eines geberlosen Synchron-Drehstrommotors einer Vakuumpumpe, bevorzugt einer Turbomolekularpumpe, umfasst einen Drehstrom-Wechselrichter, insbesondere einen Drehstrom-Zweipunkt-Wechselrichter, und eine Steuerung, wobei der Drehstrom-Wechselrichter über die Steuerung entsprechend dem erfindungsgemäßen Raumzeiger-Modulationsverfahren und/oder entsprechend dem erfindungsgemäßen hybriden Modulationsverfahren und/oder entsprechend dem erfindungsgemäßen Hochfahrverfahren ansteuerbar ist.

Die erfindungsgemäße Vakuumpumpe, insbesondere Turbomolekularpumpe, umfasst einen Stator und einen relativ zum Stator um eine Rotorachse drehbar gelagerten Rotor und wenigstens eine Antriebseinheit, wobei die Antriebseinheit eine Drehstrommaschine, insbesondere einen geberlosen Synchron-Drehstrommotor umfasst, die bzw. der über eine erfindungsgemäße Vorrichtung ansteuerbar ist.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1    eine perspektivische Ansicht einer Turbomolekularpumpe,

Fig. 2    eine Ansicht der Unterseite der Turbomolekularpumpe von Fig. 1,

Fig. 3    einen Querschnitt der Turbomolekularpumpe längs der in Fig. 2 gezeigten Schnittlinie A-A,

Fig. 4    eine Querschnittsansicht der Turbomolekularpumpe längs der in Fig. 2 gezeigten Schnittlinie B-B,

Fig. 5    eine Querschnittsansicht der Turbomolekularpumpe längs der in Fig. 2 gezeigten Schnittlinie C-C,

Fig. 6    eine schematische Darstellung eines beispielhaften Drehstromwechselrichters, bei dem die Erfindung anwendbar ist,

Fig. 7    eine schematische Darstellung beispielhafter aktiver Spannungsvektoren für eine Raumzeiger-Modulation,

Fig. 8    eine in einem orthogonalen Koordinatensystem dargestellte beispielhafte willkürliche Spannung als Ausgangspunkt für die Anwendung der Erfindung,

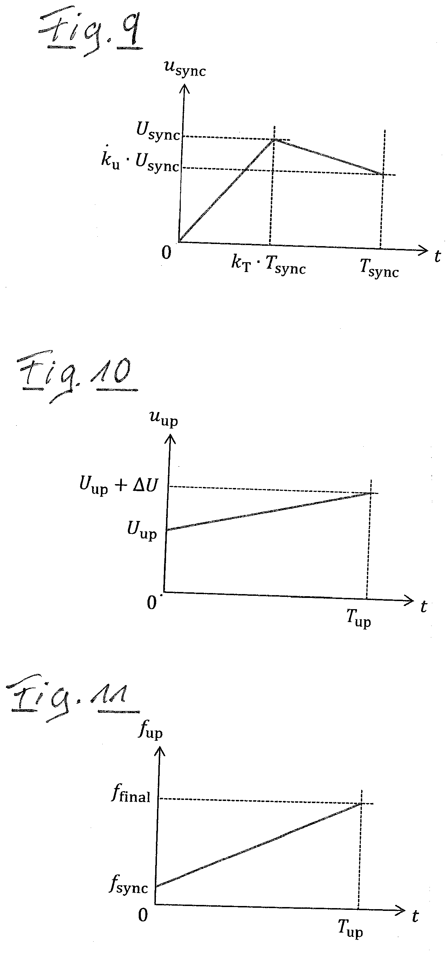

Fig. 9    die Amplitude $u_{sync}$ des Synchronisations-Spannungsvektors $\vec{u}_{sync}$ während eines beispielhaften Synchronisationsschritts des erfindungsgemäßen Hochlaufverfahrens,

Fig. 10    die Amplitude $u_{up}$ des Hochlauf-Spannungsvektors $\vec{u}_{up}$ während eines beispielhaften Hochlaufschritts des erfindungsgemäßen Hochlaufverfahrens, und

Fig. 11    die Frequenz $f_{up}$ des rotierenden Hochlauf-Spannungsvektors $\vec{u}_{up}$ während eines beispielhaften Hochlaufschritts des erfindungsgemäßen Hochlaufverfahrens.

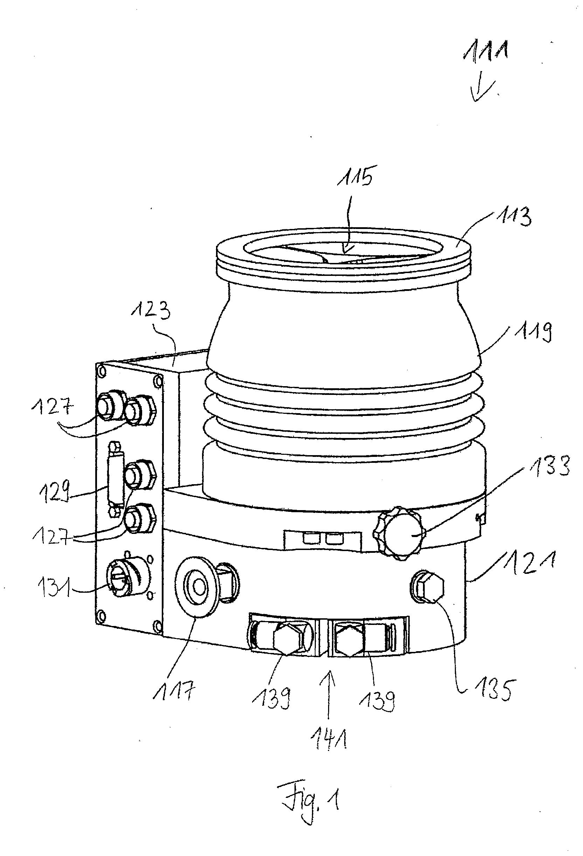

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

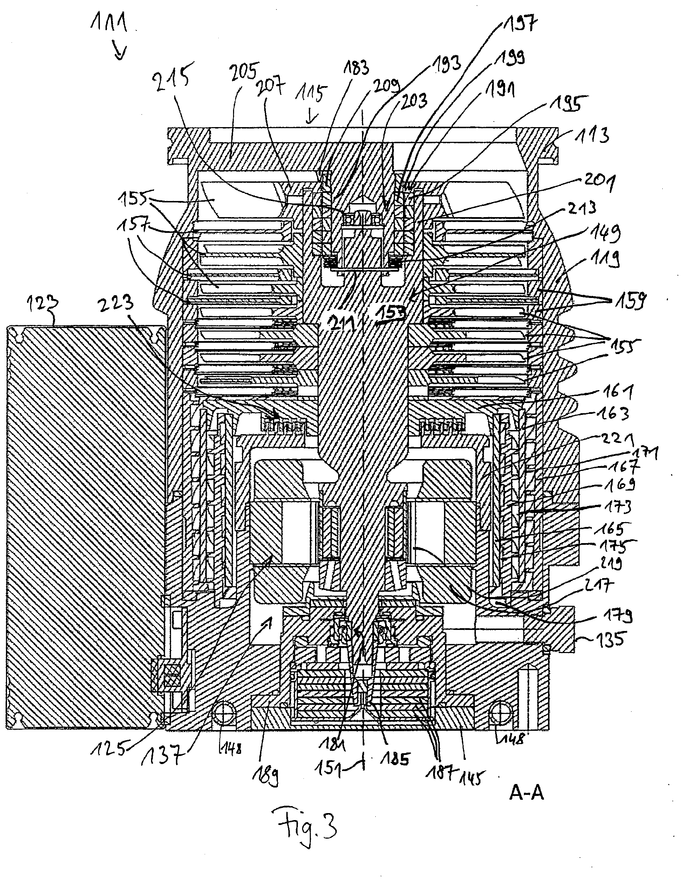

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

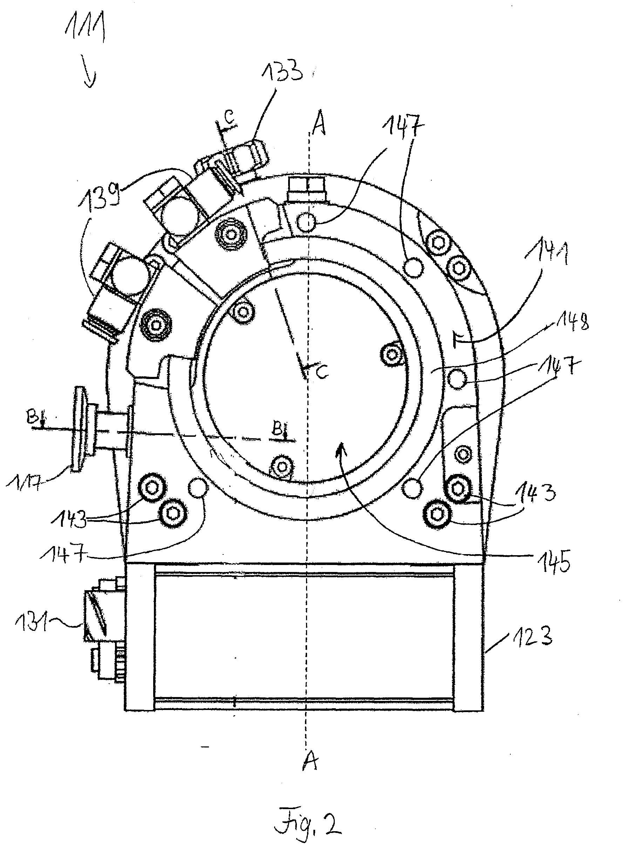

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

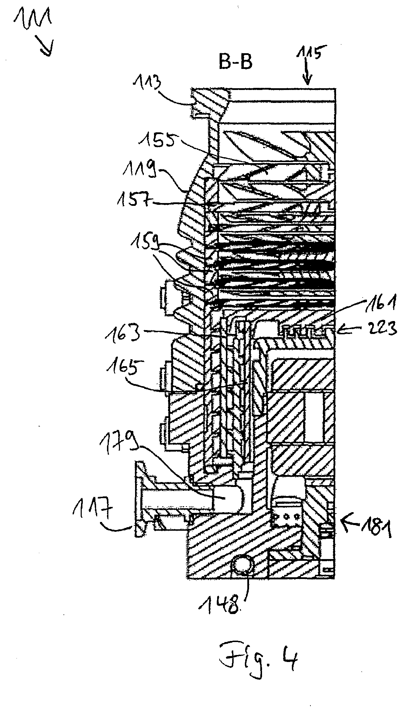

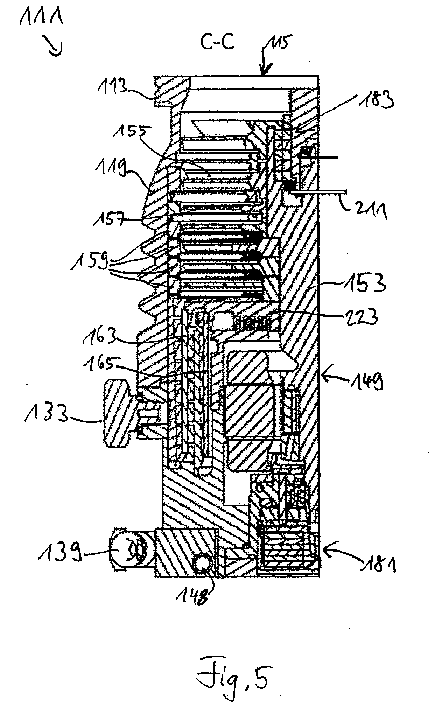

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

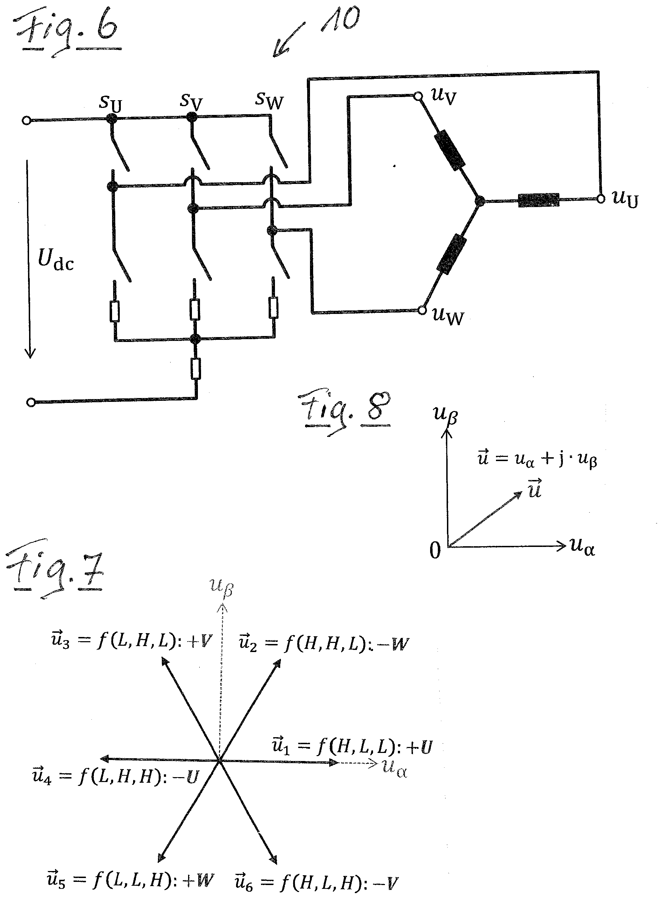

Fig. 6 zeigt in schematischer Darstellung einen beispielhaften Drehstrom-Wechselrichter 10, der für jede der drei Phasen $\zeta$ = U, V, W eine Halbbrücke aufweist, so dass die Ausgangsspannung $u_V$, $u_U$, $u_W$ einer jeweiligen Phase U, V, W entweder auf das positive oder auf das negative Zwischenkreispotential $U_{dc}$ gelegt werden kann. Das Spannungspotential $u_\zeta$ einer jeweiligen Phase $\zeta$ nimmt den Wert $U_{dc}$ an, wenn der Schaltzustand $s_\zeta$ = H ist, und den Wert 0 an, wenn der Schaltzustand $s_\zeta$ = L ist. Bei einem gegebenen Taktverhältnis $\lambda_\zeta \in [0,1]$ ergibt sich für eine jeweilige Phase $\zeta$ eine Spannung $u_\zeta = \lambda_\zeta \times U_{dc}$.

Fig. 7 zeigt in schematischer Darstellung beispielhafte aktive Spannungsvektoren für eine Raumzeiger-Modulation. Dabei sind die Spannungsvektoren $\vec{u}_\zeta$ in einem orthogonalen Koordinatensystem mit dem Realteil $u_\alpha$ und dem Imaginärteil $u_\beta$ der Spannungsvektoren entsprechenden Koordinaten dargestellt. Ein jeweiliger aktiver Spannungsvektor $\vec{u}_\zeta$ ist abhängig von den Schaltzuständen der drei Phasen, so dass die folgende Beziehung gilt: $\vec{u}_\zeta = f(s_u, s_v, s_w)$. Der Nullvektor $\vec{u}_0$ ist durch die Beziehung $\vec{u}_0 = f(L,L,L)$ definiert.

Fig. 8 zeigt eine in einem orthogonalen Koordinatensystem dargestellte beispielhafte willkürliche Spannung $\vec{u}$. Die Koordinaten des orthogonalen Koordinatensystems entsprechen wieder dem Realteil $u_\alpha$ und dem Imaginärteil $u_\beta$ der Spannungsvektoren. Eine jeweilige Spannung lässt sich damit durch die folgende Beziehung darstellen: $\vec{u} = u_\alpha + j \times u_\beta$.

Wie im Folgenden dargestellt, können die drei Spannungspotentiale uu, uv und uw unter Verwendung der Clarke-Transformation in den durch die beiden Spannungen $u_\alpha$ und $u_\beta$ definierten Spannungsvektor $\vec{u}$ transformiert werden:

$$\begin{bmatrix} u_\alpha \\ u_\beta \end{bmatrix} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} u_U \\ u_V \\ u_W \end{bmatrix}$$

Unter Verwendung der inversen Clarke-Transformation kann der gewünschte Spannungsvektor $\vec{u}^* = u_\alpha^* + j \cdot u_\beta^*$ wie folgt auf die drei auf das Nullpotential bezogenen Spannungspotentiale $u_{U,0}^*$, $u_{V,0}^*$ und $u_{W,0}^*$ transformiert werden:

$$\begin{bmatrix} u_{U,0}^* \\ u_{V,0}^* \\ u_{W,0}^* \end{bmatrix} = \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} u_\alpha^* \\ u_\beta^* \end{bmatrix}$$

Bei dem erfindungsgemäßen Raumzeiger-Modulationsverfahren wird beispielsweise ein in der Fig. 6 dargestellter Drehstrom-Wechselrichter 10, insbesondere Drehstrom-Zweipunkt-Wechselrichter, für eine auf der Basis der Pulsweitenmodulation betreibbare Drehstrommaschine so angesteuert, dass während einer jeweiligen Pulsweitenmodulations-Periode zumindest eine der drei Phasen U, V, W des Wechselrichters 10 nicht geschaltet bzw. höchstens zwei der drei Phasen U, V, W des Wechselrichters 10 geschaltet werden. Dabei können ausgehend von einem gegebenen Soll-Spannungsraumzeiger zunächst die drei Soll-Spannungspotentiale $u_{U0}$, $u_{V0}$ und $u_{W0}$ der drei Phasen U, V, W des Wechselrichters 10 berechnet, von den berechneten drei Soll-Spannungspotentialen $u_{U0}$, $u_{V0}$ und $u_{W0}$ der minimale Wert $u_{Min}$ ermittelt und die endgültigen Ausgangsspannungspotentiale $u_{U\,final}$, $u_{V\,final}$ und $u_{W\_final}$ für die drei Phasen U, V, W des Wechselrichters 10 unter Berücksichtigung des ermittelten minimalen Werts $u_{Min}$ berechnet werden.

Die endgültigen Ausgangsspannungspotentiale $u_{U\,final}$, $u_{V\,final}$ und $u_{W\,final}$ für die drei Phasen U, V, W des Wechselrichters 10 können über die folgenden Beziehungen berechnet werden: $u_{U\,final} = u_{U0} - u_{Min}$, $u_{V\,final} = u_{V0} - u_{Min}$ und $U_{W\,final} = u_{W0} - U_{Min}$.

Das Taktverhältnis $\lambda$ für eine jeweilige Phase U, V, W des Wechselrichters 10 kann über die folgenden Beziehungen berechnet werden: $\lambda_U = u_{U\,final} / U_{dc}$, $\lambda_V = u_{V\,final} / U_{dc}$ und $\lambda_W = u_{W\,final} / U_{dc}$, wobei $U_{dc}$ die Zwischenkreisspannung ist.

Die drei Soll-Spannungspotentiale $u_{U0}$, $u_{V0}$ und $u_{W0}$ der drei Phasen U, V, W des Wechselrichters 10 können dann unter Verwendung einer inversen Clarke-Transformation aus zwei Spannungen $u_\alpha$ und $u_\beta$ in einem orthogonalen Koordinatensystem berechnet werden.

Schließlich können die beiden Spannungen $u_\alpha$ und $u_\beta$ aus einem Spannungsvektor in Form eines Betrages und eines Winkels berechnet werden.

Bei der erfindungsgemäßen Raumzeigermodulation wird somit ein schwebendes Spannungspotential für den Startpunkt verwendet. Zunächst wird der minimale Wert der drei auf den Ausgangs- oder Nullpunkt bezogenen Potentiale $u_{U,0}^*$, $u_{V,0}^*$ und $u_{W,0}^*$ entsprechend der folgenden Beziehung ermittelt: $u_{min} = \min(u_{U,0}^*, u_{V,0}^*, u_{W,0}^*)$. Das Taktverhältnis $\lambda_\zeta$ einer jeweiligen Phase wird dann wie folgt berechnet: $\lambda_\zeta = \dfrac{u_{\zeta,0}^* - u_{min}}{U_{dc}}$, $\zeta = U, V, W$.

Mit einem solchen erfindungsgemäßen Raumzeiger-Modulationsverfahren wird auf unmittelbare, effiziente Weise ohne zusätzlichen Rechenaufwand eine Amplitude von $U_{dc}/\sqrt{3}$ erreicht, womit die Rechenbelastung der verwendeten Mikrocontroller entsprechend reduziert wird. Während einer jeweiligen Pulsweitenmodulations-Periode wird zumindest eine der drei Phasen U, V, W des Wechselrichters 10 nicht geschaltet bzw. es werden höchstens zwei der drei Phasen U, V, W des Wechselrichters 10 geschaltet. Während einer jeweiligen Rotationsperiode der Drehstrommaschine schaltet somit ein jeweiliger Zweig des Wechselrichters 10 während eines Drittels der Zeitdauer nicht. Entsprechend ist bei einer gegebenen Schaltfrequenz $f_F$ die Schaltdauer auf $\frac{2}{3} f_F$ reduziert, womit die Schaltverluste um 33% reduziert werden.

Gemäß einem erfindungsgemäßen hybriden Modulationsverfahren zur Ansteuerung eines Drehstromwechselrichters, insbesondere Drehstrom-Zweipunkt-Wechselrichters für eine auf der Basis der Pulsweitenmodulation betreibbare Drehstrommaschine kann für relativ größere Phasenströme das erfindungsgemäße Raumzeiger-Modulationsverfahren und für relativ kleinere Phasenströme ein herkömmliches Modulationsverfahren angewandt werden, bei dem alle drei Phasen U, V, W des Wechselrichters 10 zum Spannungsschalten beitragen.

Das erfindungsgemäße Verfahren zum Hochfahren einer auf der Basis der Pulsweitenmodulation betreibbaren geberlosen Drehstrommaschine, bei dem das erfindungsgemäße Raumzeiger-Modulationsverfahren und/oder das erfindungsgemäße hybride Modulationsverfahren anwendbar ist, umfasst einen Synchronisationsschritt, einen Hochlaufschritt und einen Überprüfungsschritt. Dabei wird im Überprüfungsschritt in dem Fall, dass das Hochfahren erfolgreich verlaufen ist, entsprechend einem Teilschritt a) ein interner Beobachter für die geberlose feldorientierte Maschinenregelung initialisiert und das Hochfahrverfahren beendet, und im Fall eines Scheiterns des Hochfahrens entsprechend einem Teilschritt b) ein Abbremsen der Drehstrommaschine bis zum Stillstand bewirkt, woraufhin die Drehstrommaschine erneut hochgefahren wird.

Im Synchronisationsschritt wird die Drehstrommaschine im Leerlaufbetrieb mit einem Synchronisations-Spannungsvektor $\vec{u}_{sync}$ angesteuert, der durch die Beziehung $\vec{u}_{sync} = u_{sync} \cdot e^{j2\pi f_{sync} \cdot t}$ definiert ist, wobei die gesamte Dauer des Synchronisationsvorgangs durch $T_{sync}$ definiert ist. Der Synchronisations-Spannungsvektor $\vec{u}_{sync}$ rotiert mit einer konstanten Frequenz $f_{sync}$ in einem relativ geringen Frequenzbereich oder bei der Frequenz Null. Die Amplitude $\vec{u}_{sync}$ des Synchronisations-Spannungsvektors $\vec{u}_{sync}$ nimmt innerhalb des Zeitintervalls zwischen 0 und $k_T \times T_{sync}$ mit $k_T \in (0,1)$ zu. Die Amplitude $u_{sync}$ ändert sich während des Zeitintervalls zwischen $k_T \times T_{sync}$ und $T_{sync}$ linear vom Spannungswert $u_{sync}$ bis auf $k_u \times u_{sync}$, mit $k_u \geq 0$.

Im Hochlaufschritt wird die Drehstrommaschine im Leerlaufbetrieb mit einem Hochlauf-Spannungsvektor $\vec{u}_{up}$ angesteuert, der durch die Beziehung $\vec{u}_{up} = u_{up} \cdot e^{j2\pi f_{up} \cdot t + y_{up}}$ definiert ist. Dabei ist der Hochlaufvorgang durch die Parameter Gesamthochlaufzeit $T_{up}$, Endrotationsgeschwindigkeit $f_{final}$ in Hz und Anfangsamplitude $u_{up}$ definiert. Die Amplitude $u_{up}$ des rotierenden Hochlauf-Spannungsvektors $\vec{u}_{up}$ nimmt linear von $u_{up}$ bis $u_{up} + \Delta U$ zu, wobei $\Delta U$ über die Beziehung $\Delta U = 2\pi \cdot \Psi_M \cdot (f_{final} - f_{sync})$ berechnet wird, in der $\Psi_M$ die magnetische Flussdichte der Drehstrommaschine ist. Die Frequenz $f_{up}$ des rotierenden Hochlauf-Spannungsvektors $\vec{u}_{up}$ nimmt linear von $f_{sync}$ bis zu einer Endfrequenz zu. Der Anfangswinkel $\gamma_{up}$ des Hochlauf-Spannungsvektors $\vec{u}_{up}$ am Anfang des Hochlaufvorgangs wird durch die Beziehung $\gamma_{up} = \gamma_{sync} + \Delta\gamma$ berechnet. Dabei ist $\gamma_{sync}$ der Winkel des Synchronisations-Spannungsvektors $\vec{u}_{sync}$ am Ende des Synchronisationsvorgangs und $\Delta\gamma$ ein Parameter zwischen 0 und $\pm45°$.

Im Initialisierungsteilschritt a) des Überprüfungsschritts wird die anfängliche elektrische Winkelgeschwindigkeit $\omega_0$ über die Beziehung $\omega_0 = |\vec{u}|/\Psi_M$ bestimmt. Der anfängliche elektrische Winkel $\gamma_0$ wird über die Beziehung

$$\gamma_0 = \angle\vec{u} - \frac{\pi}{2}$$

bestimmt. In dem Fall, dass eine negative Hochlaufgeschwindigkeit erforderlich sein sollte, wird diese über die Beziehung $\omega_0 = -|\vec{u}|/\Psi_M$ mit $\gamma_0 = \angle\vec{u} - \frac{\pi}{2}$ $\gamma_0$ berechnet.

Im Abbremsteilschritt b) des Überprüfungsschrittes wird der Wechselrichter 10 aktiviert und mit einem konstanten Spannungsvektor $\vec{u} = u_{brk}$ beaufschlagt und bis zu einem Einschaltzeitpunkt $T_{on}$ gewartet. Im Folgenden wird der Wechselrichter 10 deaktiviert und bis zu einem Ausschaltzeitpunkt $T_{off}$ gewartet, bei dem alle Phasenströme den Wert Null annehmen. Es wird dann die Amplitude $|\vec{u}|$ der Gegen-EMK gemessen. In dem Fall, dass die Amplitude $|\vec{u}|$ geringer ist als ein Grenzwert $U_{stop}$, wird der Bremsvorgang beendet. Andernfalls wird der Abbremsteilschritt b) wiederholt.

Im Überprüfungsschritt wird nach dem Hochlaufvorgang der Wechselrichter 10 deaktiviert und bis zu einem Ausschaltzeitpunkt $T_{off}$ gewartet, bis alle Phasenströme den Wert Null annehmen. Zudem werden die drei Phasenspannungen uu, uv und $u_W$ als Gegen-EMK gemessen und unter Verwendung der Clarke-Transformation der Spannungsvektor $\vec{u} = u_\alpha + j \cdot u_\beta$ der Gegen-EMK berechnet. Es können dann der Betrag $|\vec{u}| = \sqrt{u_\alpha^2 + u_\beta^2}$ und der Winkel $\angle\vec{u} = atan\left(\frac{u_\beta}{u_\alpha}\right)$ des Spannungsvektors der Gegen-EMK berechnet werden. In dem Fall, dass der Betrag größer ist als ein Grenzwert $U_{backEMF\ low}$, wird der Initialisierungsteilschritt a), und andernfalls der Abbremsteilschritt b) durchgeführt.

Mit dem erfindungsgemäßen Hochfahrverfahren können auf der Basis der Pulsweitenmodulation betreibbare Drehstrommaschinen und insbesondere auf der Basis der Pulsweitenmodulation betreibbare geberlose Drehstrom-Synchronmaschinen oder -motoren auf relativ einfache und robuste Weise hochgefahren werden.

Eine erfindungsgemäße Vorrichtung zur Ansteuerung einer Drehstrommaschine, insbesondere eines geberlosen Synchron-Drehstrommotors, auf der Basis der Pulsbreitenmodulation umfasst einen Drehstrom-Wechselrichter 10, insbesondere einen Drehstrom-Zweipunkt-Wechselrichter, und eine Steuerung. Dabei kann es sich bei dem Drehstrom-Wechselrichter 10 der erfindungsgemäßen Vorrichtung beispielsweise um einen Wechselrichter der in der Fig. 6 dargestellten Art handeln. Über die Steuerung der erfindungsgemäßen Vorrichtung ist der Drehstrom-Wechselrichter 10 entsprechend dem erfindungsgemäßen Raumzeiger-Modulationsverfahren, entsprechend dem erfindungsgemäßen hybriden Modulationsverfahren und/oder entsprechend dem erfindungsgemäßen Hochfahrverfahren ansteuerbar.

Das erfindungsgemäße Raumzeiger-Modulationsverfahren, das erfindungsgemäße hybride Modulationsverfahren, das erfindungsgemäße Hochfahrverfahren sowie die erfindungsgemäße Vorrichtung sind insbesondere zur Ansteuerung einer jeweiligen Antriebseinheit einer Vakuumpumpe, insbesondere Turbomolekularpumpe, und beispielsweise zur Ansteuerung einer Vakuumpumpe, insbesondere Turbomolekularpumpe, der in den Fig. 1 bis 5 dargestellten Art anwendbar.

Die erfindungsgemäße Vakuumpumpe, insbesondere Turbomolekularpumpe, umfasst einen Stator und einen relativ zum Stator um eine Rotorachse drehbar gelagerten Rotor sowie wenigstens eine Antriebseinheit, die eine Drehstrommaschine, insbesondere einen geberlosen Synchron-Drehmotor umfasst, die bzw. der entsprechend dem erfindungsgemäßen Raumzeiger-Modulationsverfahren, entsprechend dem erfindungsgemäßen hybriden Modulationsverfahren, entsprechend dem erfindungsgemäßen Hochfahrverfahren und/oder über die erfindungsgemäße Vorrichtung ansteuerbar ist.

**Bezugszeichenliste**

| | |
|---|---|
| 10 | Drehstrom-Wechselrichter |
| 111 | Turbomolekularpumpe |
| 113 | Einlassflansch |
| 115 | Pumpeneinlass |
| 117 | Pumpenauslass |
| 119 | Gehäuse |
| 121 | Unterteil |
| 123 | Elektronikgehäuse |
| 125 | Elektromotor |
| 127 | Zubehöranschluss |
| 129 | Datenschnittstelle |
| 131 | Stromversorgungsanschluss |
| 133 | Fluteinlass |
| 135 | Sperrgasanschluss |
| 137 | Motorraum |
| 139 | Kühlmittelanschluss |
| 141 | Unterseite |
| 143 | Schraube |
| 145 | Lagerdeckel |
| 147 | Befestigungsbohrung |
| 148 | Kühlmittelleitung |
| 149 | Rotor |
| 151 | Rotationsachse |
| 153 | Rotorwelle |
| 155 | Rotorscheibe |
| 157 | Statorscheibe |
| 159 | Abstandsring |
| 161 | Rotornabe |
| 163 | Holweck-Rotorhülse |
| 165 | Holweck-Rotorhülse |
| 167 | Holweck-Statorhülse |
| 169 | Holweck-Statorhülse |

| 171 | Holweck-Spalt |
| 173 | Holweck-Spalt |
| 175 | Holweck-Spalt |
| 179 | Verbindungskanal |
| 181 | Wälzlager |
| 183 | Permanentmagnetlager |
| 185 | Spritzmutter |
| 187 | Scheibe |
| 189 | Einsatz |
| 191 | rotorseitige Lagerhälfte |
| 193 | statorseitige Lagerhälfte |
| 195 | Ringmagnet |
| 197 | Ringmagnet |
| 199 | Lagerspalt |
| 201 | Trägerabschnitt |
| 203 | Trägerabschnitt |
| 205 | radiale Strebe |
| 207 | Deckelelement |
| 209 | Stützring |
| 211 | Befestigungsring |
| 213 | Tellerfeder |
| 215 | Not- bzw. Fanglager |
| 217 | Motorstator |
| 219 | Zwischenraum |
| 221 | Wandung |
| 223 | Labyrinthdichtung |
| U, V, W | Phasen des Wechselrichters |
| $U_{dc}$ | Zwischenkreisspannung |
| $T_{up}$ | Gesamthochlaufzeit |
| $U_{up}$ | Anfangsamplitude |
| $\Psi_M$ | magnetische Flussdichte der Drehstrommaschine |
| $T_{on}$ | Einschaltzeitpunkt |
| $T_{off}$ | Ausschaltzeitpunkt |
| $u_{U0}, u_{V0}, u_{W0}$ | anfängliche Soll-Spannungspotentiale der Phasen U, V, W |
| $u_{U\,final}, u_{V\,final}, u_{W\,final}$ | endgültige Ausgangsspannungssignale der Phasen U, V, W |
| $u_{Min}$ | minimaler Wert |
| $\lambda_\zeta$ | Taktverhältnis für eine jeweilige Phase $\zeta$ |
| $u_\alpha$ | Realteil eines Spannungsvektors |
| $u_\beta$ | Imaginärteil eines Spannungsvektors |
| $\vec{u}_{sync}$ | Synchronisations-Spannungsvektor |
| $u_{sync}$ | Amplitude des Synchronisations-Spannungsvektors |
| $\vec{u}_{up}$ | Hochlauf-Spannungsvektor |
| $u_{up}$ | Amplitude des Hochlauf-Spannungsvektors |
| $f_{final}$ | Endrotationsgeschwindigkeit |
| $\gamma_{up}$ | Anfangswinkel des Hochlauf-Spannungsvektors |
| $\gamma_{sync}$ | Winkel des Synchronisations-Spannungsvektors am Ende des Synchronisationsvorgangs |
| $\omega_0$ | anfängliche elektrische Winkelgeschwindigkeit |

**Patentansprüche**

1. Raumzeiger-Modulationsverfahren zur Ansteuerung eines Drehstrom-Wechselrichters (10), insbesondere eines Drehstrom-Zweipunkt-Wechselrichters, für eine auf der Basis der Pulsweitenmodulation betreibbare Drehstrommaschine, insbesondere eine Drehstrommaschine einer Vakuumpumpe, bevorzugt einer Turbomolekularpumpe, wobei während einer jeweiligen Pulsweitenmodulations-Periode zumindest eine der drei Phasen U, V, W des Wechselrichters (10) nicht geschaltet bzw. höchstens zwei der drei Phasen U, V, W des Wechselrichters (10) geschaltet werden, wobei die Ausgangsspannung uu, uv und uw einer jeweiligen Phase U, V, W entweder auf das positive oder auf das negative Potential einer Zwischenkreisspannung gelegt werden kann, und

**dadurch gekennzeichnet, dass** ausgehend von einem gegebenen Soll-Spannungsraumzeiger zunächst die drei Soll-Spannungspotentiale uuo, uvo und uwo der drei Phasen U, V, W des Wechselrichters (10) berechnet, von den berechneten drei Soll-Spannungspotentialen uuo, uvo und uwo der minimale Wert $u_{Min}$, d.h. das Kleinste dieser drei Soll-Spannungspotentiale, ermittelt und die endgültigen Ausgangsspannungspotentiale uu $_{final}$, $u_{V\,final}$ und $u_{W\,final}$ für die drei Phasen U, V, W des Wechselrichters (10) unter Berücksichtigung des ermittelten minimalen Werts $u_{Min}$ über die folgenden Beziehungen berechnet werden:

$u_{U\,final} = u_{U0} - U_{Min}$, $u_{V\,final} = u_{V0} - U_{Min}$ und $u_{W\,final} = u_{W0} - u_{Min}$.

2. Raumzeiger-Modulationsverfahren nach Anspruch 1,
   **dadurch gekennzeichnet, dass** das Taktverhältnis $\lambda$ für eine jeweilige Phase U, V, W des Wechselrichters (10) über die folgenden Beziehungen berechnet wird: $\lambda_U = u_{U\,final} / U_{dc}$, $\lambda_V = u_{V\,final} / U_{dc}$ und $\lambda_W = u_{W\,final} / U_{dc}$, wobei Udcdie Zwischenkreisspannung ist.

3. Raumzeiger-Modulationsverfahren nach Anspruch 1 oder 2,
   **dadurch gekennzeichnet, dass** die drei Soll-Spannungspotentiale uuo, uvo und uwo der drei Phasen U, V, W des Wechselrichters (10) unter Verwendung einer inversen Clarke-Transformation aus zwei Spannungen $u_\alpha$ und $u_\beta$ in einem orthogonalen Koordinatensystem berechnet werden.

4. Raumzeiger-Modulationsverfahren nach Anspruch 3,
   **dadurch gekennzeichnet, dass** die beiden Spannungen $u_\alpha$ und $u_\beta$ aus einem Spannungsvektor in Form eines Betrags und eines Winkels berechnet werden.

5. Hybrides Modulationsverfahren zur Ansteuerung eines Drehstrom-Wechselrichters (10), insbesondere eines Drehstrom-Zweipunkt-Wechselrichters, für eine auf der Basis der Pulsweitenmodulation betreibbare Drehstrommaschine, insbesondere eine Drehstrommaschine einer Vakuumpumpe, bevorzugt einer Turbomolekularpumpe, wobei für einen ersten Bereich von Phasenströmen das Raumzeiger-Modulationsverfahren nach einem der vorstehenden Ansprüche und für einen zweiten Bereich von Phasenströmen, in welchem die Phasenströme kleiner sind als die im ersten Bereich, ein Modulationsverfahren angewandt wird, bei dem alle drei Phasen U, V, W des Wechselrichters (10) zum Spannungsschalten beitragen.

6. Verfahren zum Hochfahren einer auf der Basis der Pulsweitenmodulation betreibbaren geberlosen Drehstrommaschine, insbesondere einer geberlosen Drehstrommaschine einer Vakuumpumpe, bevorzugt einer Turbomolekularpumpe, unter Anwendung des Raumzeiger-Modulationsverfahrens nach einem der Ansprüche 1 bis 4 und/oder des hybriden Modulationsverfahrens nach Anspruch 5,
   wobei das Hochfahrverfahrverfahren einen Synchronisationsschritt, einen Hochfahrschritt und einen Überprüfungsschritt umfasst und im Überprüfungsschritt in dem Fall, dass das Hochfahren erfolgreich verlaufen ist, entsprechend einem Teilschritt a) ein interner Beobachter für die geberlose feldorientierte Maschinenregelung initialisiert und das Hochfahrverfahren beendet wird, und im Fall eines Scheiterns des Hochfahrens entsprechend einem Teilschritt b) ein Abbremsen der Drehstrommaschine bis zum Stillstand bewirkt wird, woraufhin die Drehstrommaschine erneut hochgefahren wird.

7. Hochfahrverfahren nach Anspruch 6,
   **dadurch gekennzeichnet, dass** die Drehstrommaschine im Synchronisationsschritt im Leerlaufbetrieb mit einem Synchronisations-Spannungsvektor $\vec{u}_{sync}$ angesteuert wird, der durch die Beziehung $\vec{u}_{sync} = u_{sync} \cdot e^{j2\pi f_{sync} \cdot t}$ definiert ist, wobei die gesamte Dauer des Synchroni sationsvorgangs bzw. Synchronisationsschritts durch $T_{sync}$ definiert ist, und/oder der Synchronisations-Spannungsvektor $\vec{u}_{sync}$ mit einer konstanten Frequenz $f_{sync}$ im Bereich der Frequenz Null rotiert, und/oder die Amplitude $u_{sync}$ des Synchronisations-Spannungsvektors $\vec{u}_{sync}$ innerhalb des Zeitintervalls zwischen 0 und $k_T \times T_{sync}$ mit $k_T \in (0,1)$ zunimmt, und/oder die Amplitude $u_{sync}$ sich während des Zeitintervalls zwischen $k_T \times T_{sync}$ und $T_{sync}$ linear vom Spannungswert $U_{sync}$ bis auf $k_u \times U_{sync}$ mit $k_u \geq 0$ ändert.

8. Hochfahrverfahren nach Anspruch 6 oder 7,
   **dadurch gekennzeichnet, dass** die Drehstrommaschine im Hochlaufschritt im Leerlaufbetrieb mit einem Hochlauf-Spannungsvektor $\vec{u}_{up}$ angesteuert wird, der durch die Beziehung

$$\vec{u}_{up} = U_{up} \cdot e^{j2\pi f_{up} \cdot t + \gamma_{up}}$$

definiert ist, wobei der Hochlaufvorgang durch die Parameter Gesamthochlaufzeit $T_{up}$, Endrotationsgeschwindigkeit $f_{final}$ in Hz und Anfangsamplitude $U_{up}$ definiert ist, und wobei die Amplitude $u_{up}$ des rotierenden Hochlauf-Spannungsvektors $\vec{u}_{up}$ linear von $U_{up}$ bis $U_{up} + \Delta U$ zunimmt und $\Delta U$ über die Beziehung $\Delta U = 2\pi \cdot \Psi_M \cdot (f_{final} - f_{sync})$ berechnet wird, in der $\Psi_M$ die magnetische Flussdichte der Drehstrommaschine ist,

und/oder die Frequenz $f_{up}$ des rotierenden Hochlauf-Spannungsvektors $\vec{u}_{up}$ linear von $f_{sync}$ bis zu einer Endfrequenz zunimmt,

und/oder der Anfangswinkel $\gamma_{up}$ des Hochlauf-Spannungsvektors $\vec{u}_{up}$ am Anfang des Hochlaufvorgangs durch die Beziehung $\gamma_{up} = \gamma_{sync} + \Delta\gamma$ berechnet wird, wobei $\gamma_{sync}$ der Winkel des Synchronisations-Spannungsvektors $\vec{u}_{sync}$ am Ende des Synchronisationsvorgangs und $\Delta\gamma$ ein Parameter zwischen 0 und $\pm 45°$ ist.

9. Hochfahrverfahren nach einem der Ansprüche 6 bis 8,
**dadurch gekennzeichnet, dass** im zur Initialisierung vorgesehenen Teilschritt a) des Überprüfungsschrittes die anfängliche elektrische Winkelgeschwindigkeit $w_0$ über die Beziehung $\omega_0 = |\vec{u}|/\Psi_M$ bestimmt wird,

der anfängliche elektrische Winkel $\gamma_0$ über die Beziehung $\gamma_0 = \angle\vec{u} - \dfrac{\pi}{2}$ bestimmt wird, und

in dem Fall, dass eine negative Endhochlaufgeschwindigkeit erforderlich sein sollte, diese über die Beziehung $\omega_0 = |\vec{u}|/\Psi_M$ mit $\gamma_0 = \angle\vec{u} + \dfrac{\pi}{2}$ $\gamma_0$ berechnet wird.

10. Hochfahrverfahren nach einem der Ansprüche 6 bis 9,
**dadurch gekennzeichnet, dass** im zum Abbremsen vorgesehenen Teilschritt b) des Überprüfungsschrittes der Wechselrichter (10) aktiviert und mit einem konstanten Spannungsvektor $\vec{u} = U_{brk}$ beaufschlagt und bis zu einem Einschaltzeitpunkt $T_{on}$ gewartet wird,

der Wechselrichter (10) deaktiviert und bis zu einem Ausschaltzeitpunkt $T_{off}$ gewartet wird, bei dem alle Phasenströme den Wert Null annehmen,

die Amplitude $|\vec{u}|$ der Gegen-EMK gemessen wird,

in dem Fall, dass die Amplitude $|\vec{u}|$ der Gegen-EMK geringer als ein Grenzwert $U_{stop}$ ist, der Bremsvorgang beendet wird, und andernfalls der Abbremsteilschritt b) wiederholt wird.

11. Hochfahrverfahren nach einem der Ansprüche 6 bis 10,
**dadurch gekennzeichnet, dass** im Überprüfungsschritt nach dem Hochlaufvorgang der Wechselrichter (10) deaktiviert und bis zu einem Ausschaltzeitpunkt $T_{off}$ gewartet wird, bis alle Phasenströme den Wert Null annehmen,

die drei Phasenspannungen uu, uv und uw als Gegen-EMK gemessen werden und unter Verwendung der Clarke-Transformation der Spannungsvektor $\vec{u} = u_\alpha + j \cdot u_\beta$ der Gegen-EMK berechnet wird,

der Betrag $|\vec{u}| = \sqrt{u_\alpha^2 + u_\beta^2}$ und der Winkel $\angle\vec{u} = atan\left(\dfrac{u_\beta}{u_\alpha}\right)$ des Spannungsvektors der Gegen-EMK berechnet werden, und

in dem Fall, dass der Betrag größer ist als ein Grenzwert $U_{backEMF\ low}$, der Initialisierungsteilschritt a) und andernfalls der Abbremsteilschritt b) durchgeführt wird.

12. Vorrichtung zur Ansteuerung einer Drehstrommaschine, insbesondere eines geberlosen Synchron-Drehstrommotors, auf der Basis der Pulsbreitenmodulation, insbesondere zur Ansteuerung einer Drehstrommaschine bzw. eines geberlosen Synchron-Drehstrommotors einer Vakuumpumpe, bevorzugt einer Turbomolekularpumpe, mit einem Drehstrom-Wechselrichter(10), insbesondere einem Drehstrom-Zweipunkt-Wechselrichter, und einer Steuerung, wobei der Drehstrom-Wechselrichter (10) über die Steuerung entsprechend dem Raumzeiger-Modulationsverfahren nach einem der Ansprüche 1 bis 4, entsprechend dem hybriden Modulationsverfahren nach Anspruch 5 und/oder entsprechen dem Hochfahrverfahren nach einem der Ansprüche 6 bis 11 ansteuerbar ist.

13. Vakuumpumpe, insbesondere Turbomolekularpumpe, mit einem Stator und einem relativ zum Stator um eine Rotorachse drehbar gelagerten Rotor und wenigstens einer Antriebseinheit, wobei die Antriebseinheit eine Drehstrommaschine, insbesondere einen geberlosen Synchron-Drehstrommotor, umfasst, die bzw. der entsprechend dem Raumzeiger-Modulationsverfahren nach einem der Ansprüche 1 bis 4, entsprechend dem hybriden Modulationsverfahren nach Anspruch 5, nach dem Hochfahrverfahren nach einem der Ansprüche 6 bis 11 und/oder über eine Vorrichtung nach Anspruch 12 ansteuerbar ist.

**Claims**

1. A space vector modulation method for controlling a three-phase inverter (10), in particular a three-phase two-point inverter, for a three-phase machine which can be operated on the basis of the pulse width modulation, in particular for a three-phase machine of a vacuum pump, preferably of a turbomolecular pump,
   wherein at least one of the three phases U, V, W of the inverter (10) is not switched or at most two of the three phases U, V, W of the inverter (10) are switched during a respective pulse width modulation period, wherein the output voltage uu, uv and uw of a respective phase U, V, W can be applied either to the positive potential or to the negative potential of an intermediate circuit voltage,
   **characterized in that**,
   starting from a given desired voltage space vector, first the three desired voltage potentials uuo, uvo and uwo of the three phases U, V, W of the inverter (10) are calculated, the minimum value $u_{Min}$, i.e. the smallest of these three desired voltage potentials, is determined from the calculated three desired voltage potentials uuo, uvo and uwo and the final output voltage potentials $u_{U\ final}$, $u_{V\ final}$ and $u_{W\ final}$ for the three phases U, V, W of the inverter (10) are calculated, taking into account the determined minimum value $u_{Min}$, via the following relationships:

$$u_{U\ final} = u_{U0} - u_{Min}, \quad u_{V\ final} = u_{V0} - u_{Min} \text{ and } u_{W\ final} = u_{W0} - u_{Min}.$$

2. A space vector modulation method in accordance with claim 1, **characterized in that** the cycle ratio $\lambda$ for a respective phase U, V, W of the inverter (10) is calculated via the following relationships: $\lambda_U = u_{U\ final} / U_{dc}$, $\lambda_V = u_{V\ final} / U_{dc}$ and $\lambda_W = u_{W\ final} / U_{dc}$, where $U_{dc}$ is the intermediate circuit voltage.

3. A space vector modulation method in accordance with claim 1 or claim 2, **characterized in that** the three desired voltage potentials uuo, uvo and uwo of the three phases U, V, W of the inverter (10) are calculated using an inverse Clarke transformation from two voltages $u_\alpha$ and $u_\beta$ in an orthogonal coordinate system.

4. A space vector modulation method in accordance with claim 3, **characterized in that** the two voltages $u_\alpha$ and $u_\beta$ are calculated from a voltage vector in the form of an amount and an angle.

5. A hybrid modulation method of controlling a three-phase inverter (10), in particular a three-phase two-point inverter, for a three-phase machine which can be operated on the basis of the pulse width modulation, in particular for a three-phase machine of a vacuum pump, preferably of a turbomolecular pump, wherein the space vector modulation method in accordance with any one of the preceding claims is applied for a first range of phase currents and a modulation method, in which all three phases U, V, W of the inverter (10) contribute to the voltage switching, is applied for a second range of phase currents in which the phase currents are smaller than those in the first range.

6. A method of starting up an encoderless three-phase machine which can be operated on the basis of the pulse width modulation, in particular an encoderless three-phase machine of a vacuum pump, preferably of a turbomolecular pump, using the space vector modulation method in accordance with any one of the claims 1 to 4 and/or the hybrid modulation method in accordance with claim 5,
   wherein the start-up method comprises a synchronization step, a start-up step and a checking step and in the checking step, in the event that the starting up has taken place successfully, an internal observer for the encoderless field-oriented machine regulation is initialized and the start-up method is ended in accordance with a part step a) and, in the event of a failure of the starting up, a deceleration of the three-phase machine up to a standstill is brought about in accordance with a part step b), whereupon the three-phase machine is started up again.

7. A start-up method in accordance with claim 6,
   **characterized in that**, in the synchronization step, the three-phase machine is controlled in an idling mode by a synchronization voltage vector $\vec{u}_{sync}$ which is defined by the relationship
   $\vec{u}_{sync} = u_{sync} \cdot e^{j2\pi f_{sync} \cdot t}$, with the total duration of the synchronization process or synchronization step being defined by $T_{sync}$, and/or the synchronization voltage vector $\vec{u}_{sync}$ rotating at a constant frequency $f_{sync}$ in the range of the frequency zero, and/or the amplitude $u_{sync}$ of the synchronization voltage vector $\vec{u}_{sync}$ increasing within the time interval between 0 and kT x $T_{sync}$, where kT $\in$ (0.1), and/or the amplitude $u_{sync}$ changing linearly from the voltage value $U_{sync}$ up to $k_u$ x $U_{sync}$, where $k_u \geq 0$, during the time interval between $k_T$ x $T_{sync}$ and $T_{sync}$.

8. A start-up method in accordance with claim 6 or claim 7, **characterized in that**, in the start-up step, the three-phase machine is controlled in the idling mode by a start-up voltage vector $\vec{u}_{up}$ which is defined by the relationship

$$\vec{u}_{up} = U_{up} \cdot e^{j2\pi f_{up} \cdot t + \gamma_{up}},$$

with the start-up process being defined by the parameters total start-up time $T_{up}$, final rotational speed $f_{final}$ in Hz and initial amplitude $U_{up}$, and with the amplitude $u_{up}$ of the rotating start-up voltage vector $\vec{u}_{up}$ increasing linearly from $U_{up}$ to $U_{up} + \Delta U$ and $\Delta U$ being calculated via the relationship $\Delta U = 2\pi \cdot \Psi_M \cdot (f_{final} - f_{sync})$ in which $\Psi_M$ is the magnetic flux density of the three-phase machine,
and/or the frequency $f_{up}$ of the rotating start-up voltage vector $\vec{u}_{up}$ increasing linearly from $f_{sync}$ up to a final frequency;
and/or the initial angle $\gamma_{up}$ of the start-up voltage vector $\vec{u}_{up}$ at the start of the start-up process being calculated by the relationship $\gamma_{up} = \gamma_{sync} + \Delta\gamma$, where $\gamma_{sync}$ is the angle of the synchronization voltage vector $\vec{u}_{sync}$ at the end of the synchronization process and $\Delta\gamma$ is a parameter between 0 and $\pm$ 45°.

9. A start-up method in accordance with any one of the claims 6 to 8, **characterized in that**, in the part step a) of the checking step provided for the initialization, the initial electrical angular speed $\omega_0$ is determined via the relationship $\omega_0 = |\vec{u}|/\Psi_M$;

the initial electrical angle $\gamma_0$ is determined via the relationship $\gamma_0 = \angle\vec{u} - \dfrac{\pi}{2}$; and,
in the event that a negative final start-up speed is required, it is calculated via the relationship $\omega_0 = |\vec{u}|/\Psi_M$, where

$$\gamma_0 = \angle\vec{u} + \frac{\pi}{2}.$$

10. A start-up method in accordance with any one of the claims 6 to 9, **characterized in that**, in the part step b) of the checking step provided for the deceleration, the inverter (10) is activated and is acted on by a constant voltage vector $\vec{u} = U_{brk}$ and it is waited until a switch-on time $T_{on}$;
the inverter (10) is deactivated and it is waited until a switch-off time $T_{off}$ at which all the phase currents adopt the value zero;
the amplitude $|\vec{u}|$ of the back EMF is measured; and,
in the event that the amplitude $|\vec{u}|$ of the back EMF is less than a limit value $U_{stop}$, the deceleration process is ended and otherwise the deceleration part step b) is repeated.

11. A start-up method in accordance with any one of the claims 6 to 10, **characterized in that**, in the checking step after the start-up process, the inverter (10) is deactivated and it is waited until a switch-off time $T_{off}$ until all the phase currents adopt the value zero;
the three phase voltages uu, uv and uw are measured as the back EMF and the voltage vector $\vec{u} = u_\alpha + j \cdot u_\beta$ of the back EMF is calculated using the Clarke transformation;

the amount $|\vec{u}| = \sqrt{u_\alpha^2 + u_\beta^2}$ and the angle $\angle\vec{u} = atan\left(\dfrac{u_\beta}{u_\alpha}\right)$ of the voltage vector of the back EMF are calculated; and,
in the event that the amount is greater than a limit value $U_{backEMF\ low}$, the initialization part step a) and otherwise the deceleration part step b) is performed.

12. An apparatus for controlling a three-phase machine, in particular an encoderless synchronous three-phase motor, on the basis of the pulse width modulation, in particular for controlling a three-phase machine or an encoderless synchronous three-phase motor of a vacuum pump, preferably of a turbomolecular pump, comprising a three-phase inverter (10), in particular a three-phase two-point inverter, and a control, with the three-phase inverter (10) being controllable via the control in accordance with the space vector modulation method in accordance with any one of the claims 1 to 4, in accordance with the hybrid modulation method in accordance with claim 5 and/or in accordance with the start-up method in accordance with any one of the claims 6 to 11.

**13.** A vacuum pump, in particular a turbomolecular pump, comprising a stator and a rotor rotatably supported about a rotor axis relative to the stator; and at least one drive unit, wherein the drive unit comprises a three-phase machine, in particular an encoderless synchronous three-phase motor, which is controllable in accordance with the space vector modulation method in accordance with any one of the claims 1 to 4, in accordance with the hybrid modulation method in accordance with claim 5, in accordance with the start-up method in accordance with any one of the claims 6 to 11 and/or via an apparatus in accordance with claim 12.

**Revendications**

**1.** Procédé de modulation de vecteur spatial pour piloter un onduleur triphasé (10), en particulier un onduleur triphasé deux niveaux, pour une machine triphasée pouvant fonctionner sur la base de la modulation de largeur d'impulsion, en particulier pour une machine triphasée d'une pompe à vide, de préférence d'une pompe turbomoléculaire, dans lequel

pendant une période respective de modulation de largeur d'impulsion, l'une au moins des trois phases U, V, W de l'onduleur (10) n'est pas commutée ou au maximum deux desdites trois phases U, V, W de l'onduleur (10) sont commutées,

la tension de sortie uu, uv et uw d'une phase respective U, V, W peut être appliquée soit au potentiel positif soit au potentiel négatif d'une tension de circuit intermédiaire,

**caractérisé en ce que**

en partant d'un vecteur spatial de tension de consigne donné, on calcule tout d'abord les trois potentiels de tension de consigne uuo, uvo et uwo des trois phases U, V, W de l'onduleur (10), parmi les trois potentiels de tension de consigne $u_{U0}$, $u_{V0}$ et $u_{W0}$ on détermine la valeur minimale $u_{Min}$, c'est-à-dire le plus petit de ces trois potentiels de tension de consigne, et on calcule les potentiels de tension de sortie définitifs $u_{U\,final}$, $u_{V\,final}$ et $u_{W\,final}$ pour les trois phases U, V, W de l'onduleur (10), en prenant en compte la valeur minimale déterminée $u_{Min}$, par les relations suivantes :

$$u_{U\,final} = u_{U0} - u_{Min}, \quad u_{V\,final} = u_{V0} - u_{Min} \text{ et } u_{W\,final} = u_{W0} - u_{Min}.$$

**2.** Procédé de modulation de vecteur spatial selon la revendication 1, **caractérisé en ce que** on calcule le rapport cyclique $\lambda$ pour une phase respective U, V, W de l'onduleur (10) par les relations suivantes : $\lambda_U = u_{U\,final} / U_{dc}$, $\lambda_V = u_{V\,final} / U_{dc}$ et $\lambda_W = u_{W\,final} / U_{dc}$, où $U_{dc}$ est la tension de circuit intermédiaire.

**3.** Procédé de modulation de vecteur spatial selon la revendication 1 ou 2, **caractérisé en ce que** on calcule les trois potentiels de tension de consigne uuo, uvo et uwo des trois phases U, V, W de l'onduleur (10) en utilisant une transformée de Clarke inverse à partir de deux tensions $u_\alpha$ et $u_\beta$ dans un système de coordonnées orthogonales.

**4.** Procédé de modulation de vecteur spatial selon la revendication 3, **caractérisé en ce que** on calcule les deux tensions $u_\alpha$ et $u_\beta$ à partir d'un vecteur de tension sous la forme d'une norme et d'un angle.

**5.** Procédé de modulation hybride pour piloter un onduleur triphasé (10), en particulier un onduleur triphasé deux niveaux, pour une machine triphasée pouvant fonctionner sur la base de la modulation de largeur d'impulsion, en particulier pour une machine triphasée d'une pompe à vide, de préférence d'une pompe turbomoléculaire, dans lequel

pour une première plage de courants de phase, on utilise le procédé de modulation de vecteur spatial selon l'une des revendications précédentes, et

pour une seconde plage de courants de phase dans laquelle les courants de phase sont plus petits que dans la première plage, on utilise un procédé de modulation dans lequel toutes les trois phases U, V, W de l'onduleur (10) contribuent à la commutation de la tension.

**6.** Procédé de démarrage d'une machine triphasée sans capteur pouvant fonctionner sur la base de la modulation de largeur d'impulsion, en particulier d'une machine triphasée sans capteur d'une pompe à vide, de préférence d'une pompe turbomoléculaire, en utilisant le procédé de modulation de vecteur spatial selon l'une des revendications 1 à 4 et/ou le procédé de modulation hybride selon la revendication 5, dans lequel

le procédé de démarrage comprend une étape de synchronisation, une étape de démarrage et une étape de vérification, et dans l'étape de vérification, en cas de succès du démarrage, un observateur interne pour la commande à flux orienté de la machine sans capteur est initialisé conformément à une sous-étape a) et le procédé de démarrage est terminé, et en cas d'échec du démarrage, la machine triphasée est décélérée jusqu'à l'arrêt, puis la machine triphasée est redémarrée conformément à une sous-étape b).

7. Procédé de démarrage selon la revendication 6,
**caractérisé en ce que**
dans l'étape de synchronisation, la machine triphasée est pilotée en fonctionnement en roue libre avec un vecteur de tension de synchronisation $\vec{u}_{sync}$ défini par la relation $\vec{u}_{sync} = u_{sync} \cdot e^{j2\pi f_{sync} \cdot t}$, la durée totale de l'opération de synchronisation ou de l'étape de synchronisation étant définie par $T_{sync}$, et/ou
le vecteur de tension de synchronisation $\vec{u}_{sync}$ est rotatif à une fréquence constante $f_{sync}$ dans la plage de la fréquence zéro, et/ou l'amplitude $u_{sync}$ du vecteur de tension de synchronisation $\vec{u}_{sync}$ augmente dans l'intervalle de temps entre 0 et $k_T$ x $T_{sync}$ avec $k_T \in (0,1)$, et/ou pendant l'intervalle de temps entre $k_T$ x $T_{sync}$ et $T_{sync}$, l'amplitude $u_{sync}$ change linéairement pour passer de la valeur de tension $U_{sync}$ à $k_u$ x $U_{sync}$ avec $k_u \geq 0$.

8. Procédé de démarrage selon la revendication 6 ou 7,
**caractérisé en ce que**
dans l'étape de démarrage, la machine triphasée est pilotée en fonctionnement en roue libre avec un vecteur de tension de démarrage $\vec{u}_{up}$ défini par la relation

$$\vec{u}_{up} = U_{up} \cdot e^{j2\pi f_{up} \cdot t + \gamma_{up}}$$

où l'opération de démarrage est définie par les paramètres que sont le temps de démarrage total $T_{up}$, la vitesse de rotation finale $f_{final}$ en Hz et l'amplitude de départ $U_{up}$,
l'amplitude $U_{up}$ du vecteur de tension de démarrage rotatif $\vec{u}_{up}$ augmente linéairement pour passer de $U_{up}$ à $U_{up} + \Delta U$, et
$\Delta U$ est calculé par la relation $\Delta U = 2\pi \cdot \Psi_M \cdot (f_{final} - f_{sync})$ où $\Psi_M$ est la densité de flux magnétique de la machine triphasée,
et/ou la fréquence $f_{up}$ du vecteur de tension de démarrage rotatif $\vec{u}_{up}$ augmente linéairement pour passer de $f_{sync}$ à une fréquence finale, et/ou l'angle de départ $\gamma_{up}$ du vecteur de tension de démarrage $\vec{u}_{up}$ au départ de l'opération de démarrage est calculé par la relation $\gamma_{up} = \gamma_{sync} + \Delta\gamma$, où $\gamma_{sync}$ est l'angle du vecteur de tension de synchronisation $\vec{u}_{sync}$ à la fin de l'opération de synchronisation, et $\Delta\gamma$ est un paramètre entre 0 et $\pm$ 45°.

9. Procédé de démarrage selon l'une des revendications 6 à 8, **caractérisé en ce que**
dans la sous-étape d'initialisation a) de l'étape de vérification, la vitesse angulaire électrique initiale $\omega_0$ est déterminée par la relation $\omega_0 = |\vec{u}|/\Psi_M$, l'angle électrique initial $\gamma_0$ est déterminé par la relation $\gamma_0 = \angle\vec{u} - \dfrac{\pi}{2}$ et dans le cas où une vitesse de démarrage finale négative serait requise, celle-ci est calculée par la relation $\omega_0 = |\vec{u}|/\Psi_M$ avec $\gamma_0 = \angle\vec{u} + \dfrac{\pi}{2}$ $\gamma_0$

10. Procédé de démarrage selon l'une des revendications 6 à 9, **caractérisé en ce que**
dans la sous-étape de décélération b) de l'étape de vérification, l'onduleur (10) est activé et sollicité avec un vecteur de tension constant $\vec{u} = U_{brk}$, puis on attend jusqu'à un instant de mise en marche $T_{on}$;
l'onduleur (10) est désactivé et on attend jusqu'à un instant de coupure $T_{off}$ où tous les courants de phase prennent la valeur zéro,
l'amplitude $|\vec{u}|$ de la force contre-électromotrice est mesurée,
dans le cas où l'amplitude $|\vec{u}|$ de la force contre-électromotrice est inférieure à une valeur limite $U_{stop}$, l'opération de décélération est terminée, et sinon la sous-étape de décélération b) est répétée.

11. Procédé de démarrage selon l'une des revendications 6 à 10, **caractérisé en ce que**
dans l'étape de vérification, après l'opération de démarrage, l'onduleur (10) est désactivé et on attend jusqu'à un instant de coupure $T_{off}$ jusqu'à ce que tous les courants de phase prennent la valeur zéro,

les trois tensions de phase $u_U$, $u_V$ et $u_W$ sont mesurées comme force contre-électromotrice et

en utilisant la transformée de Clarke, on calcule le vecteur de tension $\vec{u} = u_\alpha + j \cdot u_\beta$ de la force contre-électromotrice,

on calcule la norme $|\vec{u}| = \sqrt{u_\alpha^2 + u_\beta^2}$ et l'angle $\angle \vec{u} = atan\left(\frac{u_\beta}{u_a}\right)$ du vecteur de tension de la force contre-électromotrice, et

dans le cas où la norme est supérieure à une valeur limite $U_{backEMF\ low}$, on effectue la sous-étape d'initialisation a), et, sinon, on effectue la sous-étape de décélération b).

12. Dispositif pour piloter une machine triphasée, en particulier un moteur synchrone triphasé sans capteur, sur la base de la modulation de largeur d'impulsion, en particulier pour piloter une machine triphasée ou un moteur synchrone triphasé sans capteur d'une pompe à vide, de préférence d'une pompe turbomoléculaire, comportant un onduleur triphasé (10), en particulier un onduleur triphasé deux niveaux, et un contrôleur,
dans lequel l'onduleur triphasé (10) peut être piloté par le contrôleur conformément au procédé de modulation de vecteur spatial selon l'une des revendications 1 à 4, conformément au procédé de modulation hybride selon la revendication 5 et/ou conformément au procédé de démarrage selon l'une des revendications 6 à 11.

13. Pompe à vide, en particulier pompe turbomoléculaire, comprenant un stator et un rotor monté mobile en rotation par rapport au stator autour d'un axe de rotor, et au moins une unité d'entraînement,
dans laquelle
l'unité d'entraînement comprend une machine triphasée, en particulier un moteur synchrone triphasé sans capteur, qui peut être piloté(e) conformément au procédé de modulation de vecteur spatial selon l'une des revendications 1 à 4, conformément au procédé de modulation hybride selon la revendication 5, conformément au procédé de démarrage selon l'une des revendications 6 à 11, et/ou par un dispositif selon la revendication 12.

Fig. 1

Fig. 2

Fig. 3

A-A

111

B-B    115

113

155

119

157

159

161
223

163

165

179

117

181

148

*Fig. 4*

Fig. 5

Fig. 6

$s_U$     $s_V$     $s_W$

$U_{dc}$

$u_V$

$u_U$

$u_W$

Fig. 8

$u_\beta$

$\vec{u} = u_\alpha + j \cdot u_\beta$

$\vec{u}$

0      $u_\alpha$

Fig. 7

$u_\beta$

$\vec{u}_3 = f(L, H, L): +V$    $\vec{u}_2 = f(H, H, L): -W$

$\vec{u}_1 = f(H, L, L): +U$

$\vec{u}_4 = f(L, H, H): -U$     $u_\alpha$

$\vec{u}_5 = f(L, L, H): +W$    $\vec{u}_6 = f(H, L, H): -V$

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2991206 A1

**In der Beschreibung aufgeführte Nicht-Patentliteratur**

- **DRUCKSCHRIFT AYYANAR R et al.** Start-up, short-circuit and dynamic characteristics of the full-load-range ZVS hybrid converter. *32ND. ANNUAL IEEE POW-ER ELECTRONICS SPECIALISTS CONFERENCE. PESC 2001. CONFERENCE PROCEEDINGS. VANCOUVER, CANADA, JUNE 17-21, 2001; [ANNUAL POW-ER ELECTRONICS SPECIALISTS CONFERENCE]; NEW YORK, NY: IEEE, US, Bd.,* 17. Juni 2001, vol. 1, ISSN 978-0-7803-7067-8, 26-30

- **MOHAMAD NASRUL ABDUL SATAR et al.** Application of Proteus VSM in modelling brushless DC motor drives. *MECHATRONICS (ICOM), 2011 4TH INTERNATIONAL CONFERENCE ON, IEEE,* 17. Mai 2011, ISSN 978-1-61284-435-0, 1-7